Europäisches Patentamt

European Patent Office

Office européen des brevets

(11) Veröffentlichungsnummer: **0 223 236**
**A2**

## (12) EUROPÄISCHE PATENTANMELDUNG

(21) Anmeldenummer: 86116000.0

(22) Anmeldetag: 18.11.86

(51) Int. Cl.⁴: **G11B 15/467** , G11B 5/588 , //G11B5/592

(30) Priorität: 22.11.85 DE 3541272

(43) Veröffentlichungstag der Anmeldung:
27.05.87 Patentblatt 87/22

(84) Benannte Vertragsstaaten:
AT BE CH DE ES FR GB GR IT LI LU NL SE

(71) Anmelder: Deutsche Thomson-Brandt GmbH
Hermann-Schwer-Strasse 3 Postfach 2060
D-7730 Villingen-Schwenningen(DE)

(72) Erfinder: Schandl, Hartmut, Dipl.-Ing.
Egerstrasse 2
D-7730 Villingen(DE)

(74) Vertreter: Einsel, Robert, Dipl.-Ing.
Deutsche Thomson-Brandt GmbH Patent-
und Lizenzabteilung Göttinger Chaussee 76
D-3000 Hannover 91(DE)

(54) **Magnetbandgerät.**

(57) Die Erfindung betrifft eine Spurnachsteuerung
für Magnetbandgeräte. Es werden zusätzlich zum
Nutzsignal in Spurabschnitten bestimmter Spuren
niederfrequente Steuersignale aufgezeichnet, deren
Übersprechanteile bei der Wiedergabe in Nachbarspuren gelesen werden. Durch Auswertung der
Übersprechanteile wird ein Steuersignal erzeugt,
welches eine Optimierung der Spurabtastung bewirkt.

Fig.1

# Magnetbandgerät

Bei handelsüblichen Magnetbandgeräten für Bildaufzeichnung (Videorecorder) nach dem Schrägspurverfahren erfolgt die Spurnachsteuerung im Wiedergabebetrieb (Tracking) durch Anpassen der Lage des Magnetbandes zu den rotierenden Magnetköpfen mit Hilfe einer Servoschaltung für den Capstan-Antrieb. Die Signale für die Servoschaltung werden bei der Aufzeichung aus den Synchronimpulsen des ankommenden Videosignales gewonnen und in einer als Längsspur ausgebildeten Steuerspur aufgezeichnet. Bei Wiedergabe dienen diese aufgezeichneten Impulse für die Steuerung der Spurnachstellung (Tracking) des Capstan-Antriebes. Nachteilig bei dieser Art der Servosteuerung ist die zusätzliche Steuerspur, da dadurch Platz auf dem Magnetband verloren geht. Außerdem ist eine Nachsteuerung bei Bildsuchlauf mit erhöhten Bandgeschwindigkeiten nicht möglich.

Es sind auch Videorecorder bekannt, bei denen für eine Spurnachsteuerung im Wiedergabebetrieb die rotierenden Magnetköpfe in ihrer Höhenlage relativ zum Magnetband in Abhängigkeit von Steuersignalen verstellt werden. Diese Steuersignale sind aus einem quarzstabilen Generator abgeleitet und werden bei der Aufnahme in der Schrägspur unterhalb des in der Frequenz umgesetzten modulierten Farbhilfsträgers aufgezeichnet. Es handelt sich um vier Frequenzen mit einer festen Zuordnung zu den Magnetköpfen und somit zu den einzelnen Magnetspuren. Die Magnetköpfe lesen bei Wiedergabe nicht nur die Steuerfrequenz der gerade abgetasteten Spur, sondern je nach Spurabweichung auch die in der Frequenz unterschiedlichen Übersprechanteile benachbarter Spuren. Diese Übersprechanteile sowie die der Spur zugeordnete Frequenz werden mit den Signalen des quarzstabilen Generators verglichen und es ergeben sich Mischprodukte, aus denen Regelspannungen für die Höhenverstellung der Magnetköpfe für exakte Spurabtastung abgeleitet werden.

Die Höhenverstellung selbst geschieht mittels einseitig an der Kopftrommel eingespannter aus zwei Teilen zusammengeklebter Piezokeramikplättchen, auf deren freischwingender Zunge die Videoköpfe befestigt sind. Durch Anlegen der Nachsteuerspannung werden die Piezokeramikplättchen mechanisch so ausgelenkt, daß die Magnetköpfe den aufgesprochenen Schrägspuren folgen können. Beschrieben ist diese Art der Nachsteuerung in "Grundig, Technische Informationen", 3/1980, Nr. 3, Seiten 111 - 130. Es ist aber auch möglich, statt der aufwendigen Höhenverstellung der Magnetköpfe eine Nachsteuerung des Capstan-Antriebes für exakte Spurnachführung aus der Auswertung der Frequenz unterschiedlichen Steuersignale abzuleiten.

Nachteilig bei dieser Art der Nachsteuerung ist, daß frequenzgenaue aus einem Quarzoszillator abgeleitete Frequenzen erzeugt und diese Frequenzen außerderm den einzelnen Magnetköpfen und somit den Magnetspuren zugeordnet werden müssen.

Es ist Aufgabe der Erfindung, eine Spurnachsteuerung im Wiedergabebetrieb für ein Magnetbandgerät mit rotierenden Magnetköpfen anzugeben, das ohne quarzgenaue Steuersignale und ohne besondere Steuerspur eine exakte Spurnachsteuerung ermöglicht.

Diese Aufgabe wird durch ein Magnetbandgerät mit Spurnachsteuerung nach dem Oberbegriff des Anspruchs 1 gelöst, die im Kennzeichen des Anspruchs 1 beschrieben ist. Weiterbildungen der Erfindung werden in den Unteransprüchen beschrieben.

Im Prinzip wird während der Aufzeichnung in einer Gruppe von jeweils drei Magnetspuren in Spurabschnitten ein Steuersignal (Burst) aufgezeichnet, wobei jeweils die mittlere Spur ohne Steuersignal bleibt. Es wechseln also Spuren mit Burst und Spuren ohne Burst einander ab. Es ist aber auch z.B. bei Magnetbandgeräten mit Vertikalaufzeichnung wegen der Kürze der einzelnen Spuren möglich, zwischen jeweils zwei Dreiergruppen von Magnetspuren, die abwechselnd Burst -kein Burst -Burst enthalten, mehrere Spuren ohne Burst zu schreiben.

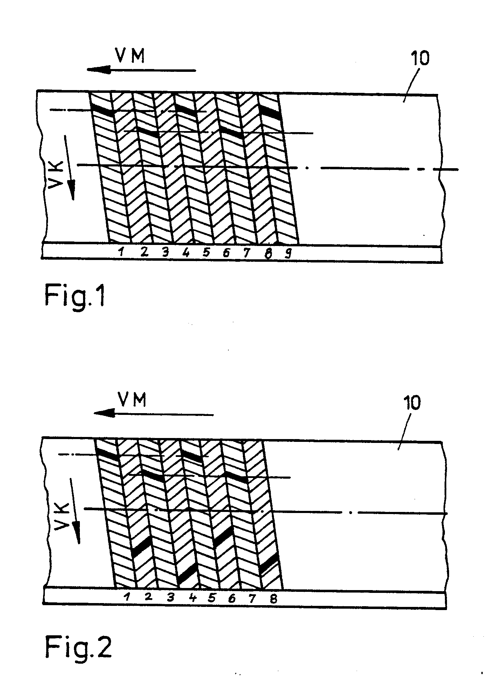

Der Burst in einer ersten Spur kann innerhalb einer Dreiergruppe an beliebiger Stelle und in beliebiger Länge innerhalb der Spur geschrieben werden. Wenn der Burst der dritten Spur dieser Gruppe von gleicher Frequenz wie der der ersten ist, muß er gegenüber der Lage des Burstes der ersten Spur vom Spuranfang aus gesehen versetzt angeordnet werden. Bei unterschiedlicher Burstfrequenz ist es aber auch möglich, gleiche Abstände der Spurabschnitte einzuhalten. Um ein Übersprechen des Steuersignales in das aufgezeichnete Nutzsignal zu vermeiden, kann der Burst einerseits durch niedrige Frequenzen realisiert werden, andererseits ist es aber auch möglich, durch spezielle Tiefenmodulation eine Störung im Nutzsignal zu vermeiden. Im Wiedergabebetrieb wird jeweils in der zweiten ohne Burst aufgezeichneten Spur das Übersprechen der benachbarten Zeilen registriert, gespeichert, und in der Amplitude miteinander verglichen. Aus dem Amplitudenvergleich werden in einer Auswertschaltung Steuersignale abgeleitet, durch die das Servosystem über den Capstan-Antrieb das Magnetband auf Spurmitte nachstellt. Da die Nachstellung des Magnetbandes für Magnetbandgeräte mit Querspuraufzeichnung eine gewisse Regelkonstante aufweist, ist es relativ unkritisch, an welcher Stelle innerhalb der Magnetspur und in welcher Länge der Burst aufgezeichnet wird. Bei Geräten mit geringen Zeitkonstanten ist es aber auch möglich, am Anfang einer Dreiergruppe von Magnetspuren den Burst in beschriebener Weise aufzuzeichnen und um eine Spur versetzt eine weitere Dreiergruppe anzuordnen, bei der der Burst gegen Ende der Spuren wie in Fig. 2 dargestellt aufgezeichnet ist.

Anhand der Figuren soll die Erfindung beispielhaft näher erläutert werden. Es zeigen:

Fig. 1 eine Anordnung von Magnetspuren mit einer burstfreien Spur zwischen zwei Spuren mit versetzt angordnetem Burst

Fig. 2 eine Anordnung von Magnetspuren mit unterschiedlich angeordnetem Burst für zwei Burstfrequenzen

Fig. 3 ein Burst-Amplitudenschema mit verschiedenen Zuordnungen von Magnetköpfen zu den einzelnen Magnetspuren im Wiedergabebetrieb.

Fig. 1 zeigt beispielhaft in einer Anordnung mit Azimutversatz aufgezeichnete Querspuren 1 -9 auf einem Magnetband 10. In den Spuren sind schwarz eingezeichnete Zeilen vorhanden, in denen zusätzlich zum Nutzsignal ein Steuersignal als Burst aufgezeichnet ist. In den Spuren 1, 5, 9 usw. ist ein Burst in jeweils der dritten Zeile vorhanden, während in den Spuren 3, 7 usw. der Burst um jeweils zwei Zeilen versetzt angeordnet ist. Die geradzahligen Spuren 2, 4, 6, 8 usw. sind ohne Burst. Der Burst muß aus einer zum aufgezeichneten Nutzsignal niedrigen Frequenz bestehen, um ein Übersprechen trotz des Azimutwinkels der einzelnen Spuren untereinander zu ermöglichen. Um eine Störung des Nutzsignales durch den Burst zu vermeiden, ist es möglich, den Burst z.B. als Tiefenmodulation aufzuzeichnen, während das Nutzsignal z.B. in der Oberfläche der Magnetschicht enthalten ist. Wird für den Burst eine feste Frequenz verwendet, müssen die in den einzelnen Spuren angeordneten Burstzeilen vom Spuranfang aus gesehen versetzt zueinander angeordnet werden. Bei unterschiedlichen Frequenzen zwischen Spur 1 und 3 ist es auch möglich, mit gleichen Abständen vom Spuranfang zu arbeiten.

In dem Beispiel handelt es sich um eine Querspuraufzeichnung, bei der das Magnetband 1 durch den Pfeil VM in seiner Vorlaufrichtung gekennzeichnet ist. Die Spuren werden von einer nicht dargestellten rotierenden Kopftrommel mit der Drehrichtung VK auf das Magnetband 1 geschrieben. Bei der Wiedergabe werden die Magnetspuren von den rotierenden Magnetköpfen abgetastet und es ergeben sich beim Abtasten der geradzahligen Spuren ohne Burst je nach Lage des Magnetkopfes zur Spur unterschiedliche Amplitugen der übersprechenden Burstanteile. Diese mit nur einer Frequenz aufgezeichneten zeitlich versetzten Burstanteile werden mittels einer Auswerteschaltung in ihren Amplituden verglichen und resultierend aus den Amplitudendifferenzen wird eine Regelspannung erzeugt, die zur Nachsteuerung des Servosystems für die Spurnachsteuerung dient.

Werden zwei verschiedene Burstfrequenzen mit gleichem Abstand vom Spuranfang aufgezeichnet, muß vor dem Amplitudenvergleich eine Selektion für wenigstens eine Frequenz vorgesehen werden, um die Richtung der Abweichung zur Spur zu ermitteln, die sich bei versetzter Aufzeichnung der Burstfrequenzen automatisch ergeben würde.

Es ist auch möglich, z.B. bei Geräten mit Querspuraufzeichnung zwischen jeweils einer Gruppe mit Burst -kein Burst -Burst mehrere Spuren ohne Burst zu schreiben, wenn die Zeitkonstante für die Spurnachregelung groß ist. Bei geringer Zeitkonstante in Schrägspuraufzeichnung oder einer Aufzeichnung, bei der die Spuren näherungsweise parallel zur Bandkante in einem Paket aufgezeichnet werden, ist es auch möglich, jede Spur mit einem Burst zu belegen. Diese Anordnung ist beispielhaft in Fig. 2 beschrieben.

Fig. 2 zeigt eine Anordnung von Magnetspuren, wie in Fig. 1 beschrieben, jedoch mit unterschiedlich angeordnetem Burst für zwei Burstfrequenzen. Die Burstverteilung am Anfang der Spuren entspricht der Fig. 1. Hierzu versetzt sind am Ende der Spuren in ähnlicher Anordnung weitere Burstschritte, jedoch mit einer zweiten Frequenz aufgezeichnet. Diese zweite Frquenz wird analog wie die Auswertung der ersten Frequenz für die Spurnachsteuerung mit geringeren Zeitkonstanten ausgewertet.

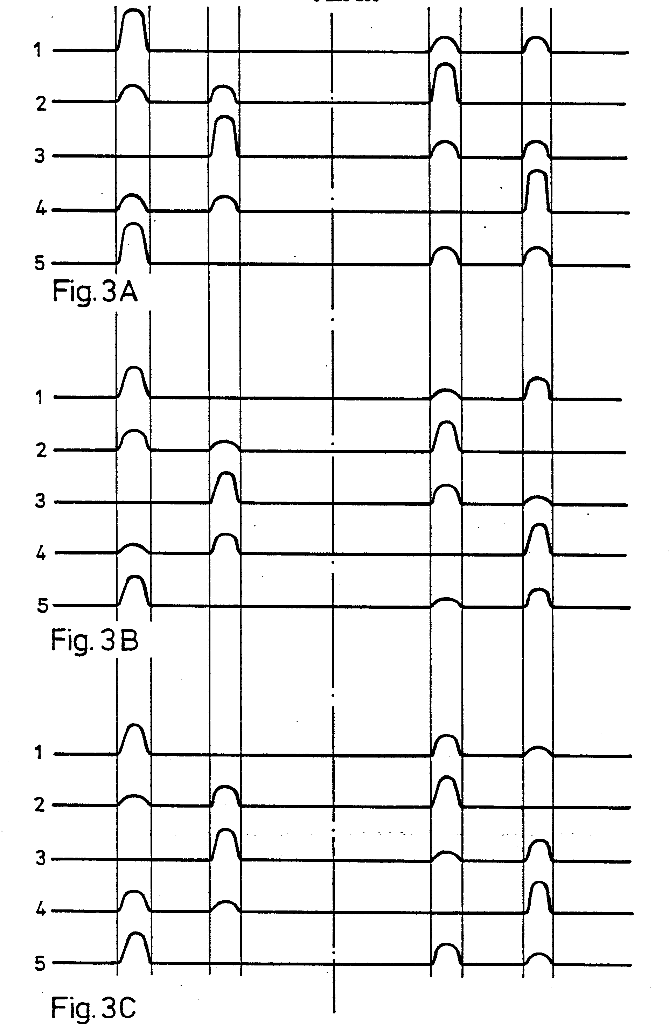

Fig. 3 zeigt in einer Zuordnung zu Fig. 2 die Amplitudenverhältnisse der abgetasteten Spuren im Wiedergabebetrieb bei Verwendung von zwei Frequenzen für die Spurnachsteuerung.

In Fig. 3a ist der Amplitudenverlauf für eine Spurabtastung aufgezeichnet, bei der die Magnetköpfe exakt mittig auf den Spuren geführt sind. Die Übersprechanteile benachbarter Spuren sind gleich groß, sowohl für die erste Frequenz am Anfang der Spuren als auch für die zweite Frequenz am Spurende.

In Fig. 3b ist ein Voreilung des jeweilig im Eingriff stehenden Magnetkopfes zur aufgezeichneten Spur dargestellt. So ist die Amplitude des Burstsignales auf der abgetasteten Spur etwas geringer als in Fig. 3a und die Übersprechanteile der benachbarten Spuren zeigen unterschiedliche Amplituden, die zur Spurnachsteuerung ausgewertet werden können.

In Fig. 3c ist ein Nacheilen des Magnetkopfes zur aufgezeichneten Spur dargestellt. Es ist zu erkennen, daß die Amplituden der Übersprechsignale benachbarter Spuren sich gegenüber Fig. 3b umgekehrt haben.

**Ansprüche**

1. Magnetbandgerät für die Aufzeichnung und Wiedergabe von Nutzsignalen mit rotierenden Magnetköpfen, deren Luftspalte abwechselnd Azimutwinkel aufweisen in zueinander parallel geführten Magnetspuren und mit Spurnachsteuerung - (Tracking) durch ein Servosystem, wobei die Ansteuerung des Servosystems durch Auswertung des Übersprechens aufgezeichneter Steuersignale erfolgt, <u>dadurch gekennzeichnet</u>, daß die Steuersignale zusätzlich zum Nutzsignal in Spurabschnitten der Magnetspuren als Burst aufgezeichnet sind, derart, daß in einer Gruppe von jeweils drei Spuren eine mittlere Spur in diesem Spurabschnitt ohne Steuersignal und zwischen zwei Gruppen von jeweils drei Spuren eine oder mehrere Spuren in diesem Spurabschnitt ohne Steuersignal angeordnet sind.

2. Magnetbandgerät nach Anspruch 1, <u>dadurch gekennzeichnet</u>, daß die Frequenz des Steuersignales konstant ist und die Spurabschnitte mit Steuersignal gegeneinander vom Spuranfang aus gesehen alternierend versetzt angeordnet sind.

3. Magnetbandgerät nach Anspruch 1, <u>dadurch gekennzeichnet</u>, daß die Spurabschnitte mit Steuersignal gleichen Abstand zum Spuranfang haben und das Steuersignal in diesem Spurabschnitt alternierend zwei unterschiedliche Frequenzen aufweist.

4. Magnetbandgerät nach Anspruch 1, <u>dadurch gekennzeichnet</u>, daß die Frequenz der Steuersignale so niederfrequent ist, daß beim Lesen der Spuren im Wiedergabebetrieb das Übersprechen benachbarter Spuren durch den Azimutversatz der Luftspalte der Magnetköpfe nicht beeinträchtigt ist.

VM

10

VK

1 2 3 4 5 6 7 8 9

Fig.1

VM

10

VK

1 2 3 4 5 6 7 8

Fig.2

0 223 236

Fig. 3A

Fig. 3B

Fig. 3C

H84/55-2